# EUROPEAN PATENT SPECIFICATION

(11) **EP 0 850 209 B1**
(45) Date of publication and mention of the grant of the patent: **17.03.2004**
(21) Application number: 96918449.8
(22) Date of filing: 07.06.1996
(51) Int. Cl.: C07C 7/20, F17D 1/05, C10L 3/10

(54) **METHOD FOR INHIBITING HYDRATE FORMATION**
VERFAHREN ZUR HEMMUNG DER BILDUNG VON HYDRATEN
PROCEDE PERMETTANT D'INHIBER LA FORMATION D'HYDRATES

(30) Priority: 08.06.1995 US 70 P
(43) Date of publication of application: 01.07.1998
(73) Proprietor: ExxonMobil Upstream Research Company, Houston, TX 77252-2189 (US)
(72) Inventor: COLLE, Karla, S., Houston, TX 77062 (US); COSTELLO, Christine, A., Easton, PA 18040 (US); TALLEY, Larry, D., Friendswood, TX 77546 (US); OELFKE, Russell, H., Houston, TX 77084 (US); BERLUCHE, Enock, Phillipsburg, NJ 08865 (US)
(74) Representative: Mitchell, Alan
(86) International application number: PCT/US1996/010003
(87) International publication number: WO 1996/041786

(56) References cited:
- WO-A-93/25798
- WO-A-95/32356
- WO-A-96/08672
- US-A- 4 132 535
- US-A- 4 856 593
- US-A- 4 973 775
- US-A- 5 244 878
- US-A- 5 331 105
- US-A- 5 420 370
- US-A- 5 426 258
- US-A- 5 432 292
- US-A- 5 434 323
- US-A- 5 491 269

## Description

The present invention relates to a method for inhibiting the formation of clathrate hydrates in a fluid. More specifically, the invention relates to a method for inhibiting the formation of gas hydrates in a pipe used to convey oil or gas.

Carbon dioxide, hydrogen sulfide, and various hydrocarbons, such as methane, ethane, propane, normal butane and isobutane, are present in natural gas and other petroleum fluids. However, water is typically found mixed in varying amounts with such petroleum fluid constituents. Under conditions of elevated pressure and reduced temperature, clathrate hydrates can form when such petroleum fluid constituents or other hydrate formers are mixed with water. Clathrate hydrates are water crystals which form a cage-like structure around guest molecules such as hydrate-forming hydrocarbons or gases. Some hydrate-forming hydrocarbons include, but are not limited to, methane, ethane, propane, isobutane, butane, neopentane, ethylene, propylene, isobutylene, cyclopropane, cyclobutane, cyclopentane, cyclohexane, and benzene. Some hydrate-forming gases include, but are not limited to, oxygen, nitrogen, hydrogen sulfide, carbon dioxide, sulfur dioxide, and chlorine.

Gas hydrate crystals or gas hydrates are a class of clathrate hydrates of particular interest to the petroleum industry because of the pipeline blockages that they can produce during the production and/or transport of the natural gas and other petroleum fluids. For example, at a pressure of about 1MPa ethane can form gas hydrates at temperatures below 4°C, and at a pressure of 3MPa ethane can form gas hydrates at temperatures below 14°C. Such temperatures and pressures are not uncommon for many operating environments where natural gas and other petroleum fluids are produced and transported.

As gas hydrates agglomerate they can produce hydrate blockages in the pipe or conduit used to produce and/or transport natural gas or other petroleum fluid. The formation of such hydrate blockages can lead to a shutdown in production and thus substantial financial losses. Furthermore, restarting a shutdown facility, particularly an offshore production or transport facility, can be difficult because significant amounts of time, energy, and materials, as well as various engineering adjustments, are often required to safely remove the hydrate blockage.

A variety of measures have been used by the oil and gas industry to prevent the formation of hydrate blockages in oil or gas streams. Such measures include maintaining the temperature and/or pressure outside hydrate formation conditions and introducing an antifreeze such as methanol, ethanol, propanol, or ethylene glycol. From an engineering standpoint, maintaining temperature and/or pressure outside hydrate formation conditions requires design and equipment modifications, such as insulated or jacketed piping. Such modifications are costly to implement and maintain. The amount of antifreeze required to prevent hydrate blockages is typically between 10% to 30% by weight of the water present in the oil or gas stream. Consequently, several thousand gallons per day of such solvents can be required. Such quantities present handling, storage, recovery, and potential toxicity issues to deal with. Moreover, these solvents are difficult to completely recover from the production or transportation stream.

Consequently, there is a need for a gas hydrate inhibitor that can be conveniently mixed at low concentrations in the produced or transported petroleum fluids. Such an inhibitor should reduce the rate of nucleation, growth, and/or agglomeration of gas hydrate crystals in a petroleum fluid stream and thereby inhibit the formation of a hydrate blockage in the pipe conveying the petroleum fluid stream.

WO 96/08672 discloses a method for inhibiting clathrate formation based on polymers formed from certain N-substituted acylamides. The additives contemplated in WO 95/32356 are polymers containing one or more five-, six- or seven-membered rings. US 4,856,593 discusses the inhibition of clathrate formation by way of surface-active agents. WO 93/25798 discloses clathrate inhibition by way of N-vinyl-2-pyrrolidone polymers. WO 96/08673 considers cyclic imino ethers useful for clathrate inhibition. WO 96/41784 discolses N-vinyl and N-allyl amide polymers for the same purpose.

One method of practicing the present invention uses gas hydrate inhibitors which can be used in the concentration range of about 0.01% to about 5% by weight of the water present in the oil or gas stream. As discussed more fully below, the inhibitors of this invention can effectively treat a petroleum fluid having a water phase.

According to the invention there is provided a method for inhibiting the formation of clathrate hydrates in a fluid having hydrate-forming constituents. The method comprises treating the fluid with an inhibitor comprising the alkylated polymers set forth in claim 1.

The inventive method inhibits the formation of clathrate hydrates in a fluid having hydrate-forming constituents. Formation of clathrate hydrates means the nucleation, growth, and/or agglomeration of clathrate hydrates. Such clathrate hydrates may be formed in a fluid whether it is flowing or substantially stationary, but are often most problematic in flowing fluid streams conveyed in a pipe. For example, flow restrictions arising from partial or complete blockages in a fluid stream can arise as clathrate hydrates adhere to and accumulate along the inside wall of the pipe used to convey the fluid. Nonetheless, the invention can be used for inhibiting formation of clathrate hydrates in substantially stationary fluids.

In one embodiment of the invention, a concentrated solution or mixture of one or more of the inhibitors of the type described below is introduced into a petroleum fluid stream having an aqueous phase. As the inhibitor solution or mixture of this invention is substantially dissolved in the aqueous phase or dispersed in the fluid stream it reduces the rate that clathrate hydrates are formed, and thereby reduces the tendency for a flow restriction to occur.

In a preferred embodiment, the solid polymer is first dissolved in an appropriate carrier solvent or liquid to make a concentrated solution or mixture. It should be understood that many liquids may effectively facilitate treatment of the fluid stream without dissolving the inhibitor. For convenience, such liquids are referred to hereafter as solvents whether they produce an inhibitor solution, emulsion, or other type of mixture. The principal purpose of the solvent is to act as a carrier for the inhibitor and to facilitate the absorption of the inhibitor into the aqueous phase of the petroleum fluid. Any solvent suitable for delivering the inhibitor to aqueous phase of the fluid may be used. Such carrier solvents include, but are not limited to, water, brine, sea water, produced water, methanol, ethanol, propanol, isopropanol, glycol, and mixtures of such solvents. Other solvents familiar to those skilled in the art may also be used.

It should be understood that the use of a carrier solvent is not required to practice the invention, but it is a convenient method of introducing the inhibitor into the fluid. In many applications the use of a carrier solvent will facilitate treatment of the fluid stream.

Any convenient concentration of inhibitor in the carrier solvent can be used, so long as it results in the desired final concentration in the aqueous phase of the petroleum fluid. Higher concentrations are preferred, since they result in a reduced volume of concentrated solution to handle and introduce into the petroleum fluid. The actual concentration used in a specific application will vary depending upon the selection of carrier solvent, the chemical composition of the inhibitor, the system temperature, and the solubility of the inhibitor in the carrier solvent at application conditions.

The inhibitor mixture is introduced into the aqueous phase of the petroleum fluid using mechanical equipment, such as, chemical injection pumps, piping tees, injection fittings, and other devices which will be apparent to those skilled in the art. However, such equipment is not essential to practicing the invention. To ensure an efficient and effective treatment of the petroleum fluid with the inhibitor mixture two points should be considered.

First, an aqueous phase is preferably present at the location the inhibitor solution is introduced into the fluid. In some petroleum fluid systems (particularly natural gas systems), an aqueous phase does not appear until the gas has cooled sufficiently for water to condense. If this is the case, the inhibitor solution is preferably introduced after the water has condensed. Alternatively, in the event that an aqueous phase is not available at the point the inhibitor solution is introduced, the inhibitor solution concentration should be selected to ensure that the viscosity of the inhibitor solution is sufficiently low to facilitate its dispersion through the fluid and permit it to reach the aqueous phase.

Second, because the inhibitor primarily serves to inhibit the formation of clathrate hydrates, rather than reverse such formation, it is important to treat the fluid prior to substantial formation of clathrate hydrates. As a wet petroleum fluid cools, it will eventually reach a temperature, known as the hydrate equilibrium dissociation temperature or T_{eq}, below which hydrate formation is thermodynamically favored. The T_{eq} of a petroleum fluid shifts as the pressure applied to the fluid and the composition of the fluid change. Various methods of determining a fluid's T_{eq} at various fluid compositions and pressures are well known to those skilled in the art. Preferably, the fluid should be treated with the inhibitor when the fluid is at a temperature greater than T_{eq}. It is possible, but not preferable, to introduce the inhibitor while the temperature is at or slightly below the T_{eq} of the fluid, preferably before clathrate hydrates have begun to form.

The quantity of inhibitor introduced into a petroleum fluid with an aqueous phase solvent is typically in the range of from about 0.01 wt% to about 5 wt% of the water present in the fluid. Preferably, the inhibitor concentration is about 0.5 wt%. For example, a laboratory study has shown that adding 0.5 wt% of a copolymer of N-methyl-N-vinylacetamide and methacryloylpyrrolidine (VIMA/MAPYD) to a petroleum fluid allowed the fluid to cool to a temperature which was about 16.4°C below its T_{eq} without formation of a hydrate blockage. A higher inhibitor concentration can be used to lower the temperature at which a hydrate blockage is obtained. A suitable concentration for a particular application, however, can be determined by those skilled in the art by taking into account the inhibitor's performance under such application, the degree of inhibition required for the petroleum fluid, and the cost of the inhibitor.

### INHIBITOR DESCRIPTION

The term "homopolymer" as used herein includes a polymer having the same monomeric repeating unit, while the term "copolymer" as used herein includes polymers having two or more different monomeric repeating units. Consequently, the term "polymer" would include all types of polymers including homopolymers, copolymers, and polymer mixtures.

Compounds belonging to the group of substantially water soluble polymers having alkylated backbones described below, and mixtures thereof, are effective inhibitors of hydrate nucleation, growth, and/or agglomeration (collectively referred to as hydrate formation). Such alkylated backbone polymers may be used in mixture with other substantially water soluble polymers, including but not limited to, poly(vinylpyrrolidone), poly(vinylcaprolactam), polyacrylamides, copolymers of vinylpyrrolidone, vinylcaprolactam, and/or acrylamides, poly(N-methyl-N-vinylacetamide), copolymers of N-methyl-N-vinylacetamide and isopropylmethacrylamide, copolymers of N-methyl-N-vinylacetamide and acryloylpiperidine, copolymers of N-methyl-N-vinylacetamide and methacryloylpyrrolidine, and copolymers of N-methyl-N-vinylacetamide and acryloylpyrrolidine.

Without limiting the scope of the invention, and for the purpose of illustrating the invention, various water soluble acrylamide polymers having alkylated backbones were evaluated including homopolymers of poly(iso-propylmethacrylamide) (PiPMAM) and the copolymers of N-methyl-N-vinylacetamide and iso-propylmethacrylamide (VIMA/iPMAM), of N-methyl-N-vinylacetamide and methacryloylpyrrolidine (VIMA/MAPYD),

### Poly(iso-propylmethacrylamide)

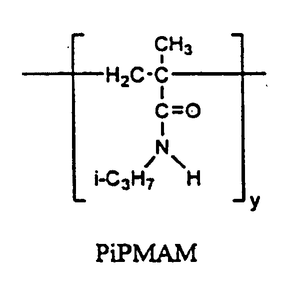

### Copolymer of N-methyl-N-vinylacetamide and iso-propylmethacrylamide

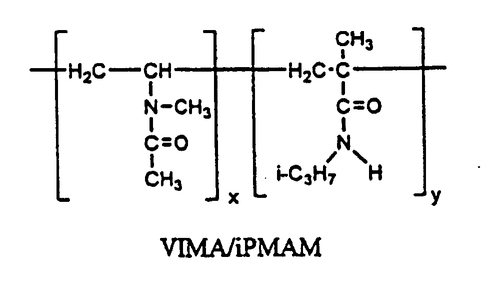

### Copolymer of N-methyl-N-vinylacetamide and methacryloylpyrrolidine

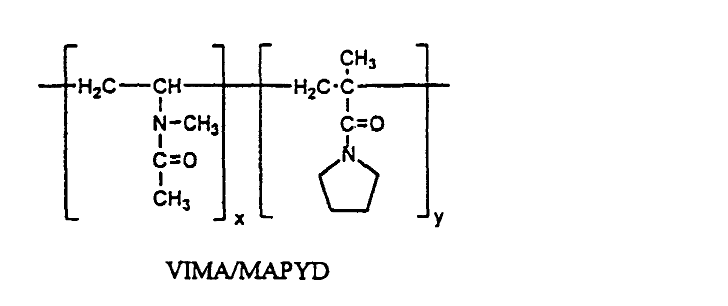

Other substantially water soluble polymers which are effective as gas hydrate inhibitors are also expected to demonstrate improved inhibition activity by methylating their backbones. Such polymers include vinyllactams such as poly(N-vinylpyrrolidone) (PVP) and poly(N-vinylcaprolactam) (PVCap), N-vinyl amides such as poly(vinylacetamide) (PVIMA) and poly(N-vinyl-N-n-propylpropionamide) (PVPP), and maleimides such as poly(ethylmaleimide) (PEME) and poly(cyclohexylmaleimide) (PCHME), as well the copolymers of such vinyllactams, N-vinyl amides, and maleimides. The homopolymers and copolymers of other acrylamides having alkylated polymer backbones, besides those specifically identified above, are also expected to demonstrate improved inhibition activity.

### INHIBITOR SYNTHESIS

### General Procedure

N-methyl-N-vinylacetamide (VIMA) is commercially available or may be synthesized according to published procedures (see e.g., A.I. Askenov, et al., *Zhurnal Obschei Khimii,* **57** (2), pp. 1634-1637 (1987)). Many of the vinyl monomers used in synthesizing various VIMA copolymers described below are commercially available. Acrylamide monomers which were not available were synthesized from the appropriate amine and acryloyl chloride according to published procedures (see e.g., S. Ito, *Kobunshi Ronbunshu,* **46** (7), pp. 437-443 (1989)). Poly(iso-propylacrylamide) (PiPAM) does not have a methylated backbone but was evaluated for comparative purposes. PiPAM was obtained from Monomer-Polymer Laboratories (Windham, NH). Poly(2-iso-propenyl-2-oxazoline) (PiPpenOx) was obtained from Nippon Shokubai (Tokyo, Japan).

Standard laboratory procedures familiar to those skilled in the art were used to synthesize the evaluated polymers and copolymers identified above. Benzene or low molecular weight alcohols were used as solvents. 2,2_-Azobis(2-methylpropionitrile) (AIBN) was used as the free radical initiator. The polymers were isolated and characterized using techniques well-known to those skilled in the art, such as ¹³C and ¹H NMR and gel permeation chromatography, to confirm their structures. Some examples of synthesis procedures that may be adapted to synthesizing other polymers and copolymers similar to those identified above are provided below.

### Polymerization of Other N-Vinyl Amide Monomers

Other N-vinyl amide monomers may be used to produce higher analogs of N-vinyl amide homopolymers (e.g., PVPP) according to published procedures known to those skilled in the art of polymer synthesis, see e.g., A.I. Askenov, et al., *Zhurnal Obschei Khimii,* **57** (2), pp. 1634-1637 (1987), Hartwimmer et al., U.S. Patent 3,531,471, and Lederer et al., U.S. Patent 3,696,085.

### Polymerization of poly(iso-propylmethacrylamide) (PiPMAM) and poly(iso-propylacrylamide) (PiPAM)

Starting materials: N-Iso-propylmethacrylamide (Aldrich) was purified by recrystallization from hexane twice. Distilled, deionized water was deoxygenated by purging with nitrogen while boiling for 1 hour. Purging was continued while the water was cooled to room temperature. The initiator, ammonium persulfate, was used as received.

PiPMAM synthesis procedure: N-Iso-propylmethacrylamide (6.4g, 50.3 mmol) was charged to a 4-necked flask fitted with a condenser, a thermometer, a mechanical stirrer, and a nitrogen inlet/outlet. Then 122g of the purged water was added with stirring and the solution purged while the reaction temperature was brought to 60°C. Once the solution was at temperature, ammonium persulfate (61 mg, 0.267 mol) was added. The reaction was allowed to proceed overnight at 60°C under nitrogen with stirring. As the polymerization proceeded, the solution became turbid. The following day, the turbid solution was freeze-dried in a commercially available freeze-drier according to the directions provided by the manufacturer. The dry polymer was dissolved in a minimum amount of methanol and precipitated into diethylether. The polymer was then filtered, redissolved, and the precipitation procedure was repeated. The isolated polymer was dried overnight in a vacuum oven at 60°C and 10⁻³ torr. The ¹H and ¹³C NMR spectra of this material was consistent with that for PiPMAM.

Poly(iso-propylacrylamide) (PiPAM) was made and characterized using substantially similar procedures described above for PiPMAM.

### Copolymerization of N-methyl-N-vinylacetamide (VIMA) and Substituted Acrylamides

In general, the copolymerization of VIMA with acrylamides, specifically N-substituted (or N,N-disubstituted) acrylamides is slow. Thus, if the two monomers are charged together in a batch copolymerization, the N-substituted acrylamide will polymerize to some extent, as a homopolymer, or at least a copolymer that is very rich in the acrylamide. To alleviate this problem, a pumping process is used to ensure that the VIMA is substantially incorporated into the copolymer. In general, the VIMA is charged to a reactor with initiator. The "faster" reacting monomer, the N-substituted acrylamide, is pumped into the VIMA solution. The optimum addition time is based on the relative reactivity of the comonomers. For our purposes, a pumping time of two to four hours was adequate. An example of this procedure is given below for the copolymerization of N-methyl-N-vinylacetamide (VIMA) and N-iso-propylmethacrylamide (iPMAM) to produce a VIMA/iPMAM copolymer.

### Copolymerization of N-methyl-N-vinylacetamide (VIMA) and N-iso-propylmethacrylamide (iPMAM)

N-iso-propylmethacrylamide was purchased from Aldrich and recrystallized twice from hexane. Anhydrous benzene was purchased from Aldrich and used without further purification. All transfers were done under an inert atmosphere. N-methyl-N-vinylacetamide was purchased from Aldrich and purified by fractional distillation. AIBN was recrystallized from methanol.

VIMA (8.43g (0.066 mol)) was passed through a commercially available inhibitor removal column and dissolved in benzene (45ml). This solution was charged to a 3-necked flask equipped with a condenser, stirrer, nitrogen inlet/outlet, and a port through which the iPMAM was pumped. The VIMA/benzene solution was purged further with N₂ for 1/2 hour. A solution of iPMAM (6.57g (0.663 mol) in 90ml benzene) was purged for 1/2 hour, then charged to a syringe pump. After purging the reaction kettle containing the VIMA solution, it was brought to 60°C. The reaction was initiated by injecting an AIBN solution (0.115g in 2 cc benzene) into the VIMA solution. Then the iPMAM solution was pumped in over the next 2 and 1/2 hours. After pumping was completed, the reaction mixture was kept at 60°C under nitrogen with stirring. The next day, it was precipitated into an excess of hexane, redissolved in a minimum amount of THF, then reprecipitated into hexane. The sample was then dried under vacuum at 60°C at 10⁻³ torr. The final yield of purified copolymer was 6g (40%). ¹³C NMR indicated that the VIMA/iPMAM ratio was 13/87.

### INHIBITOR EVALUATION

### Mini-Loop Testing Procedure

One method for evaluating the effectiveness of an inhibitor uses a bench-scale high pressure apparatus referred to as a mini-loop apparatus. A mini-loop apparatus consists of a loop of stainless steel tubing with about a one-half inch inside diameter and about ten feet in length. The loop also has a transparent section for observing the fluid flow in the loop and the onset of hydrate formation in the loop. Fluid comprising about 40% by volume SSW (Synthetic Sea Water) solution having about 3.5% total ionized salts, 40% by volume hydrocarbon condensate (i.e., C₆+), and 20% by volume hydrocarbon gas mixture is circulated around the loop at constant pressure. The hydrocarbon gas mixture is comprised of about 76 mole% methane, 9 mole% ethane, 7 mole% propane, 5 mole% n-butane, 2 mole% isobutane, and 1 mole% of C₅+. The inhibitor is typically injected into the loop as an aqueous solution to produce the desired weight percent concentration of inhibitor in the aqueous sea salt/gas solution. Generally, many hydrate inhibitors are evaluated at about 0.5 wt.% of the aqueous sea salt/gas solution.

The fluid is circulated at a constant velocity of about 2.5 feet/second. The loop and its pump lay in a controlled temperature water bath for controlling the temperature of the fluid circulating in the loop. Water is circulated to ensure uniform temperature throughout the bath and rapid heat transfer between the bath water and the loop. As the loop temperature changes or as hydrates form, the gas volume in the loop will change accordingly. Therefore, to maintain constant pressure in the loop, a pressure compensating device is required. Such a device can be comprised of a gas cell and a hydraulic oil cell separated by a floating piston. So as the gas volume in the loop changes, oil may be added or removed from the oil cell to produce a commensurate addition or removal of gas to the loop. Mini-loop tests are typically run at a pressure of about 1,000 pounds per square inch gauge (p.s.i.g.). However, any pressure between 0 and 3,000 p.s.i.g. could be selected for evaluating the performance of an inhibitor.

The temperature of the water bath is reduced at a constant rate, preferably about 6°F or 3.3°C per hour, from an initial temperature of about 70°F or 21°C. At some temperature, clathrate hydrates begin to rapidly form. As the dissolved gas is used to form clathrate hydrates there is an abrupt and corresponding decrease in the volume of dissolved gas in the aqueous sea salt/gas solution. The temperature at which this abrupt decrease in the volume of dissolved gas is observed is known as the temperature of onset for hydrate formation (Tₒₛ). Recalling from the discussion above, the hydrate equilibrium dissociation temperature or T_{eq} is the temperature below which hydrate formation is thermodynamically favored in an aqueous sea salt/gas solution without an inhibitor present. Therefore, another measure of an inhibitor's effectiveness is the difference between T_{eq} and Tₒₛ which is known as the inhibitor's subcooling temperature, T_{sub}. Therefore, for a given pressure, the greater the subcooling temperature the more effective the inhibitor. Typically, an aqueous sea salt/gas solution with no inhibitor present produces a T_{sub} of about 6-7°F or 3.3-3.9°C.

The subcooling results in Table 1 below were all obtained at 1,000 psig using the test fluid composition described above. Therefore, to compare the inhibitor performance results below with other inhibitors, such other inhibitors should be evaluated under similar test conditions, with particular attention directed to the test fluid composition and the pressure the test is conducted under.

### Mini-Loop Test Results

Without limiting the scope of the invention, and for the purpose of illustrating the invention, various homopolymers and copolymers having methylated backbones were evaluated using the mini-loop testing procedure described above. The results of these evaluations are presented below:

**TABLE 1**

| MINI-LOOP TEST RESULTS WITH POLYMERIC INHIBITORS | | | | |
|---|---|---|---|---|
| INHIBITOR | RATIO | CONC. WT% | MINI-LOOP SUBCOOLING TEMP. (°F) | MINI-LOOP SUBCOOLING TEMP.(°C) |
| None* | --- | --- | 7.0 | 3.9 |
| PiPAM* | NA | 0.5 | 20.0 | 11.1 |
| PiPMAM | NA | 0.5 | 24.0 | 13.3 |
| PVIMA | NA | 0.5 | 12.5 | 6.9 |
| VIMA/iPAM* | 42:58 | 0.5 | 24.0 | 13.3 |
| VIMA/iPMAM | 40:60 | 0.5 | 29.0 | 16.1 |
| VIMA/iPMAM | 13:87 | 0.5 | 27.0 | 15.0 |
| VIMA/APYD* | 31:69 | 0.5 | 28.0 | 15.6 |
| | 30:70 | 0.5 | 24.0 | 13.3 |
| VIMA/APYD* | 49:51 | 0.5 | 25.0 | 13.9 |
| VIMA/MARYD | 40:60 | 0.5 | 29.5 | 16.4 |

| | | | | |
|---|---|---|---|---|
| * comparative | | | | |

The results in Table 1 indicate that water soluble polymers with alkylated backbones are effective as clathrate hydrate inhibitors. Alkylating the backbone appears to enhance the hydrate inhibition activity of various water soluble polymers. Comparing the subcooling results of comparable polymers with nonalkylated versus alkylated backbones, we see that PiPAM (nonalkylated) has a 20.0°F (11.1°C) subcooling versus the 24.0°F (13.3°C) subcooling for PiPMAM (methylated) and VIMA/iPAM (nonalkylated) has a 24.0°F (13.3°C ) versus the 29.0°F (16.1°C) subcooling for VIMA/iPMAM (methylated). Also, VIMA/APYD (nonalkylated), in a ratio of about 30:70, has an average subcooling of 26.0°F (14.4°C) and, in a ratio of about 50:50, has a subcooling of 25.0°F (13.9°C) versus the 29.5°F (16.4°C) subcooling for VIMA/MAPYD (methylated).

Consequently, alkylating the backbone surprisingly and unexpectedly enhances the polymer's hydrate inhibition activity. As indicated by the results in Table 1, alkylating the backbone of a polymer with at least one methyl group will produce a subcooling for the alkylated polymer that is at least about 2°F (about 1.1°C) greater than its nonalkylated counterpart. It is also believed that alkylating the backbone of a polymer with either an ethyl or propyl group could similarly improve the polymer's subcooling performance.

The method of the present invention is useful for inhibiting the formation of clathrate hydrates in a fluid, especially in pipe or conduit used to produce and/or transport natural gas or other petroleum fluid.

## Claims

1. A method for inhibiting the formation of clathrate hydrates in a fluid having hydrate-forming constituents comprising the step of treating said fluid with an inhibitor comprising a substantially water-soluble polymer having an alkylated backbone with pendant C₁ to C₃ alkyl groups, the polymer being selected from homopolymers and copolymers of acrylamides, vinyllactams, N-vinyl amides and maleimides and it has a molecular weight between 1.000 and 6.000.000.

2. A method according to claim 1, wherein said polymer having said alkylated polymer backbone is selected from the group consisting of homopolymers of poly(iso-propylmethacrylamide), and copolymers of methyl-N-vinylacetamide and methacryloylpyrrolidine, said homopolymers and copolymers having said allcylated polymer backbone.

3. A method according to claim 1, wherein said alkyl group is a methyl group.

4. A method according to claim 1, wherein said inhibitor further comprises an additive selected from the group consisting of poly(vinylpyrrolidone), poly(vinylcaprolactam), polyacrylamides, copolymers of vinylpyrrolidone, vinylcaprolactam, and/or acrylamides, poly(N-methyl-N-vinylacetamide), copolymers of N-methyl-N-vinylacetamide and iso-propylmethacrylamide, copolymers of N-methyl-N-vinylacetamide and acryloylpiperidine, copolymers of N-methyl-N-vinylacetamide and methacryloylpyrrolidine, and copolymers of N-methyl-N-vinylacetamide and acryloylpyrrolidine.

5. A method according to claim 1, wherein said inhibitor further comprises a solvent.

6. A method according to claim 5, wherein said solvent is selected from the group consisting of water, brine, sea water, produced water, methanol, ethanol, propanol, isopropanol, glycol, and mixtures thereof.

7. A method according to claim 1, wherein said inhibitor is added in a concentration in the range of from about 0.01 wt% to about 5 wt% of water present in the fluid.

8. A method according to claim 1, wherein said inhibitor is added in a concentration of about 0.5 wt% of water present in the fluid.

9. The method according to any one of the preceding claims wherein said fluid is a petroleum fluid.

## Patentansprüche

1. Verfahren zur Inhibierung der Ausbildung von Clathrathydraten in einer Flüssigkeit, die hydratbildende Bestandteile aufweist, umfassend den Schritt der Behandlung der Flüssigkeit mit einem Inhibitor, der ein im wesentlichen wasserlösliches Polymer mit einem alkylierten Grundgerüst mit anhängenden C₁₋₃-Alkylgruppen, umfasst, das Polymer ist ausgewählt aus Homopolymeren und Copolymeren von Acrylamiden, Vinyllactamen, N-Vinylamiden und Maleimiden und besitzt ein Molekulargewicht zwischen 1.000 und 6.000.000.

2. Verfahren gemäss Anspruch 1, worin das Polymer mit alkylierter Polymer-Hauptkette ausgewählt ist aus Poly(isopropylmethacrylamid)-Homopolymeren und Copolymeren von N-Methyl-N-vinylacetamid und Methacryloylpyrrolidin, die Homopolymere und Copolymere weisen die alkylierte Polymer-Hauptkette auf.

3. Verfahren gemäss Anspruch 1, worin die Alkylgruppe eine Methylgruppe ist.

4. Verfahren gemäss Anspruch 1, worin der Inhibitor ferner einen Zusatzstoff umfasst, der ausgewählt ist aus Poly(vinylpyrrolidon), Poly(vinylcaprolactam), Polyacrylamiden, Copolymeren von Vinylpyrrolidon, Vinylcaprolactam und/oder Acrylamiden, Poly(N-methyl-N-vinylacetamid), Copolymeren von N-Methyl-N-vinylacetamid und Isopropylmethacrylamid, Copolymeren von N-Methyl-N-vinylacetamid und Acryloylpiperidin, Copolymeren von N-Methyl-N-vinylacetamid und Methacryloylpyrrolidin und Copolymeren von N-Methyl-N-vinylacetamid und Acryloylpyrrolidin.

5. Verfahren gemäss Anspruch 1, worin der Inhibitor ferner ein Lösungsmittel umfasst.

6. Verfahren gemäss Anspruch 5, worin das Lösungsmittel ausgewählt ist aus Wasser, Kochsalzlösung, Seewasser, Brauchwasser, Methanol, Ethanol, Propanol, Isopropanol, Glykol und Mischungen daraus.

7. Verfahren gemäss Anspruch 1, worin der Inhibitor in einer Menge von etwa 0,01-5 Gew.% des in der Flüssigkeit vorhandenen Wassers zugegeben wird.

8. Verfahren gemäss Anspruch 1, worin der Inhibitor in einer Konzentration von etwa 0,5 Gew.% des in der Flüssigkeit vorhandenen Wassers zugegeben wird.

9. Verfahren gemäss mindestens einem der vorhergehenden Ansprüche, worin die Flüssigkeit eine Petroleumflüssigkeit ist.

## Revendications

1. Procédé d'inhibition de la formation d'hydrates de type clathrate dans un fluide comportant des constituants de formation d'hydrates comprenant l'étape consistant à traiter ledit fluide avec un inhibiteur comprenant un polymère pratiquement soluble dans l'eau présentant un squelette alkylé avec des groupements alkyle C₁ à C₃ pendants, le polymère étant sélectionné parmi des homopolymères et copolymères d'acrylamides, de vinylactames, de N-vinylamides et de maléimides et présentant une masse moléculaire entre 1 000 et 6 000 000.

2. Procédé selon la revendication 1, dans lequel ledit polymère comportant ledit squelette de polymère alkylé est sélectionné parmi le groupe constitué des homopolymères de poly(isopropylméthacrylamide), et des copolymères de N-méthyl-N-vinylacétamide et de méthacryloylpyrrolidine, lesdits homopolymères et copolymères comportant ledit squelette de polymère alkylé.

3. Procédé selon la revendication 1, dans lequel ledit groupement alkyle est un groupement méthyle.

4. Procédé selon la revendication 1, dans lequel ledit inhibiteur comprend en outre un additif sélectionné parmi le groupe constitué de la poly(vinylpyrrolidone), du poly(vinylcaprolactame), des polyacrylamides, des copolymères de vinylpyrrolidone, de vinylcaprolactame et/ou d'acrylamides, du poly(N-méthyl-N-vinylacétamide), des copolymères de N-méthyl-N-vinylacétamide et d'isopropylméthacrylamide, des copolymères de N-méthyl-N-vinylacétamide et d'acryloylpipéridine, des copolymères de N-méthyl-N-vinylacétamide et de méthacryloylpyrrolidine, et des copolymères de N-méthyl-N-vinylacétamide et d'acryloylpyrrolidine.

5. Procédé selon la revendication 1, dans lequel ledit inhibiteur comprend en outre un solvant.

6. Procédé selon la revendication 5, dans lequel ledit solvant est sélectionné parmi le groupe constitué de l'eau, de la saumure, de l'eau de mer, de l'eau produite, du méthanol, de l'éthanol, du propanol, de l'isopropanol, du glycol est des mélanges de ceux-ci.

7. Procédé selon la revendication 1, dans lequel ledit inhibiteur est ajouté à une concentration dans la plage d'environ 0,01 % en poids à environ 5 % en poids d'eau présente dans le fluide.

8. Procédé selon la revendication 1, dans lequel ledit inhibiteur est ajouté à une concentration d'environ 0,5 % en poids d'eau présente dans le fluide.

9. Procédé selon l'une quelconque de revendications précédentes, dans lequel ledit fluide est un fluide de pétrole.
